Europäisches Patentamt

European Patent Office

Office européen des brevets

(19)

(11) Veröffentlichungsnummer : **0 150 236**
**B1**

(12) **EUROPÄISCHE PATENTSCHRIFT**

(45) Veröffentlichungstag der Patentschrift :
23.03.88

(51) Int. Cl.⁴ : **F 16 L 37/28**

(21) Anmeldenummer : **84100842.8**

(22) Anmeldetag : **27.01.84**

(54) **Renkanschluss für eine Druckleitung.**

(43) Veröffentlichungstag der Anmeldung :
**07.08.85 Patentblatt 85/32**

(45) Bekanntmachung des Hinweises auf die Patenterteilung : **23.03.88 Patentblatt 88/12**

(84) Benannte Vertragsstaaten :
**DE FR GB IT SE**

(56) Entgegenhaltungen :
**DE-A- 1 775 501**
**DE-C- 1 078 826**
**GB-A- 1 264 890**
**US-A- 1 848 538**
**US-A- 2 568 516**
**US-A- 2 824 755**
**US-A- 3 266 825**
**US-A- 3 404 705**
**US-A- 3 606 244**

(73) Patentinhaber : **Pajakanta Oy**
**Salmikatu 2**
**SF-65200 Vaasa 20 (FI)**

(72) Erfinder : **Niemi, Pertti Kalevi**
**Onkilahdenkatu 10**
**65200 Vaasa 20 (FI)**

(74) Vertreter : **Jackisch, Walter, Dipl.-Ing.**
**Menzelstrasse 40**
**D-7000 Stuttgart 1 (DE)**

## Beschreibung

Die vorliegende Erfindung betrifft einen Renkanschluß für eine Druckleitung, mit einem röhrenförmigen Grundkörper, mit einem am Grundkörper befestigten, um einen Zapfen verschwenkbaren Bedienungshebel zur Betätigung eines Ventils und von Kuppelelementen, die am vorderen Ende des Grundkörpers zum An- und Abkuppeln eines Anschlußsteckers vorgesehen sind, wobei diese Kuppelelemente eine Druck-Zug-Buchse umfassen, die das vordere Ende des Grundkörpers umgibt.

Derartige bekannte Renk- bzw. Bajonettanschlüsse werden insbesondere für Druckluftleitungen verwendet, um eine Druckluftquelle mit Verbrauchern zu verbinden.

Derartige bekannte Renkanschlüsse für Druckluftleitungen haben den Nachteil, daß im Moment des Abkuppelns der auf der Arbeitsseite anstehende Druck durch den gerade abgekuppelten Stecker plötzlich mit großer Gewalt entweicht. Dadurch kann das Ende der abgekuppelten Druckluftleitung aus der Hand der Bedienungsperson rutschen, auf umstehende Gegenstände aufschlagen, diese beschädigen und umstehende Personen gefährden. Es tritt oft auch eine Beschädigung des Anschlußsteckers auf, wodurch dieser undicht und unbrauchbar wird. Gerade bei flexiblen Druckluftleitungen tritt beim schlagartigen Entweichen des Druckmediums ein sogenannter Peitscheneffekt auf, der auch die Bedienungsperson erheblich gefährdet.

Der Erfindung liegt die Aufgabe zugrunde, einen Renkanschluß gemäß Gattungsbegriff so auszubilden, daß die Verbindung zum Anschlußstecker erst dann gelöst werden kann, wenn das Druckmedium unter dem auf der Arbeitsseite anstehenden Druck kontrolliert entwichen ist.

Diese Aufgabe wird durch die im Anspruch 1 gekennzeichnete Erfindung gelöst. Infolge dieser Ausbildung entweicht erst das Druckmedium unter dem auf der Arbeitsseite anstehenden Druck über den im Grundkörper vorgesehenen Druckauslaß, und dann kann der Anschlußstecker abgenommen werden. Die abgekuppelte Leitung kann daher sicher gehalten werden, ohne daß Personen oder Gegenstände gefährdet sind. Eine Beschädigung des Anschlußsteckers ist ebenfalls vermieden. Auch der Peitscheneffekt und die damit verbundene Unfallgefahr sind ausgeschlossen.

Weitere Merkmale der Erfindung ergeben sich aus den weiteren Ansprüchen, der Beschreibung und den Zeichnungen.

Ein Ausführungsbeispiel ist in den Zeichnungen dargestellt und wird im folgenden beschrieben. Es zeigen

Fig. 1 einen Längsschnitt durch einen erfindungsgemäßen Renkanschluß mit angekuppeltem Anschlußstecker und offenem Ventil,

Fig. 2 eine Draufsicht auf den Renkanschluß gemäß Fig. 1,

Fig. 3 in Diagrammdarstellung nebeneinander die jeweilige Lage verschiedener Teile des Renkanschlusses mit geschlossenem Ventil und abgekuppeltem Anschlußstecker,

Fig. 4 eine Darstellung gemäß Fig. 3 in einer Position, in der der Anschlußstecker eingerückt ist und das Ventil weiterhin geschlossen ist,

Fig. 5 eine Darstellung gemäß Fig. 4 in einer Position, in der der Bedienungshebel zur Verschiebung einer Druck-Zug-Buchse um 15° verschwenkt ist, wobei die Buchse einen Druckauslaß verschließt, bevor das Ventil in seine Durchgangsstellung überführt ist,

Fig. 6 eine Darstellung gemäß Fig. 5 in einer Position, in der der Bedienungshebel zur vollständigen Öffnung des Ventils verschwenkt ist, wobei die anderen Teile die in Fig. 5 gezeigte Stellung beibehalten.

Der Renkanschluß weist einen einstückigen, rohrförmigen Grundkörper 10 auf, auf den ein um einen Zapfen verschwenkbarer Bedienungshebel 1 aufgesetzt ist. Der Bedienungshebel 1 dreht ein im Schnitt kugelförmiges Ventilglied 12 zum Öffnen und Schließen eines Einlasses für ein unter Druck stehendes Medium, z. B. Druckluft, das von einer Einlaßseite zu einer Auslaßseite strömt.

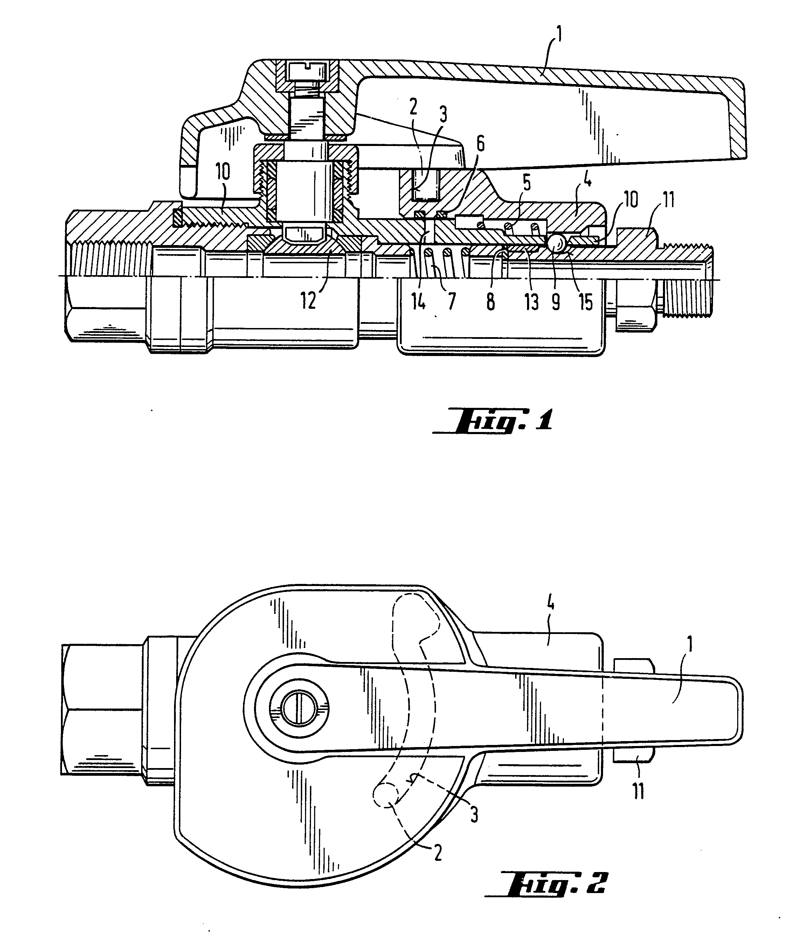

Die Einlaßleitung ist mit dem in der Fig. 1 linken Ende des Grundkörpers 10 verbunden, während an der Auslaßleitung ein Anschlußstecker 11 angekuppelt ist. Der Grundkörper 10 weist Durchlässe für Kugeln 9 auf, die als Kuppelelemente für den Anschlußstecker 11 vorgesehen sind. Liegt der Anschlußstecker 11 in seiner angekuppelten Stellung, so sinken die Kugeln 9 über einen Teil ihres Umfangs in eine im Stecker eingearbeitete, umlaufende Rille 15. Mittels einer Druck-Zug-Buchse 4, die einen Abschnitt des die Auslaßleitung des Renkanschlusses bildenden Grundkörpers 10 umgibt, werden die Kugeln 9 in ihrer teilversenkten Lage in der Rille 15 gehalten, wodurch der Anschlußstecker fest mit dem Grundkörper 10 verbunden ist. Das freie Ende des Steckers 11 sitzt auf einer Dichtung 8 auf, die in einer durch eine Feder 7 in Richtung auf den Stecker belasteten Hülse 13 liegt. Zwischen der Dichtung 8 und dem Ventilglied 12 ist im Grundkörper ein Druckauslaß 14 angeordnet, der in dem in Fig. 1 gezeigten Ausführungsbeispiel durch eine Dichtung 6 verschlossen ist, die in der Druck-Zug-Buchse 4 festliegt.

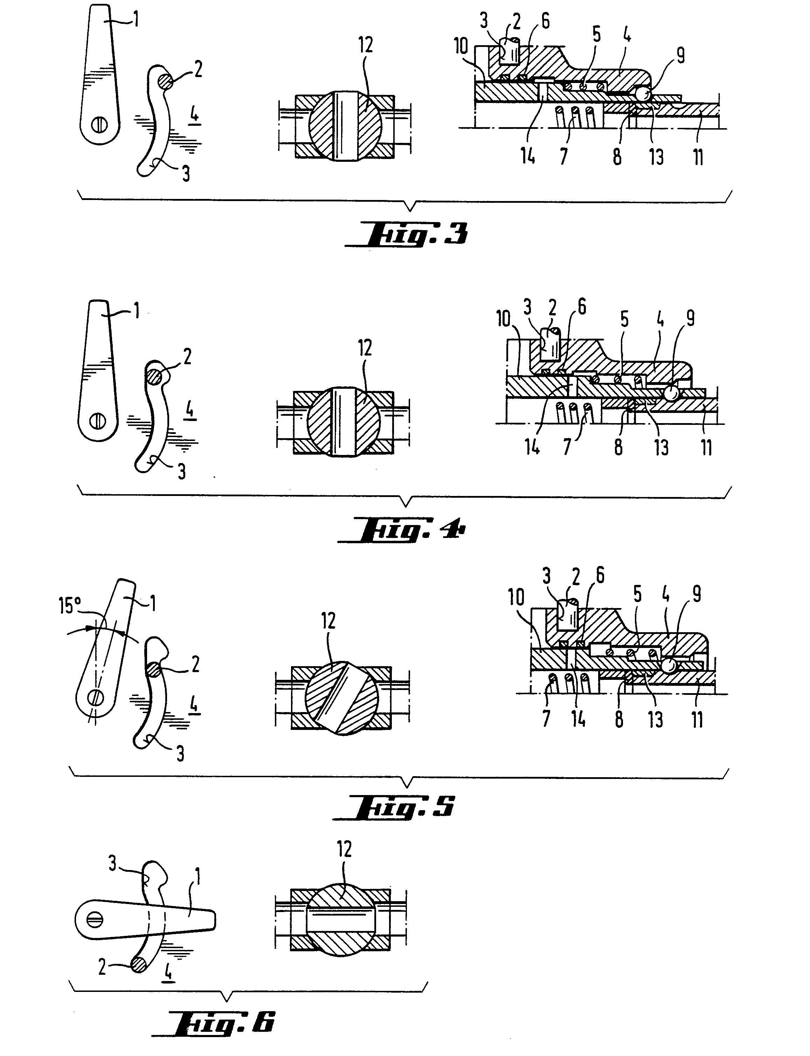

Ein am Bedienungshebel 1 angebrachter Führungszapfen 2 greift in eine Führungsbahn 3, die in der Druck-Zug-Buchse vorzugsweise als Nut eingearbeitet ist (Fig. 2). Die Form der Führungsbahn 3 bestimmt in Abhängigkeit des Drehwinkels des Bedienungshebels 1 die axiale Lage der auf dem Abschnitt des Grundkörpers 10 verschiebbar geführten Druck-Zug-Buchse 4. Ferner ist eine Druckfeder 5 vorgesehen, die die Buchse 4 in Richtung auf ihre Kupplungsstellung kraftbeaufschlagt.

In der Grundstellung des Renkanschlusses gemäß Fig. 3 steht die Einlaßseite unter Druck, während aufgrund der Stellung des Bedienungshebels 1 das Ventilglied 12 in seiner Sperrstellung liegt. Der Führungszapfen 2 liegt an einer Kurve am Ende der Führungsbahn 3 an und blockiert den Hebel 1 in dieser Grund- bzw. Ruhestellung, in der der Bedienungshebel 1 im gezeigten Ausführungsbeispiel um 90° seitwärts verschwenkt liegt. Der Außenmantel der Hülse 13 hält in dieser Stellung die Kugeln 9 in einer Lage, in der sie über einen Teil ihres Umfangs aus dem Grundkörper 10 herausragen und die federbelastete Druck-Zug-Buchse 4 in ihrer zurückgezogenen, rückwärtigen Lage halten.

In Fig. 4 ist das Ankuppeln des Anschlußsteckers 11 gezeigt. Der Anschlußstecker 11 wird in den rohrförmigen Grundkörper 10 gedrückt, wobei die Dichtung 8 den Spalt zwischen dem Grundkörper 10 und dem Anschlußstecker 11 abdichtet. Ferner wird durch das Eindrücken des Anschlußsteckers 11 die Hülse 13 gegen die Kraft der Feder 7 axial in den Grundkörper 10 verschoben, so daß die Kugeln 9 nunmehr in die im Anschlußstecker 11 vorgesehene Rille 15 fallen können, wodurch die Druck-Zug-Buchse 4 freigegeben wird. Gleichzeitig wird die Buchse 4 aufgrund der Kraft der Feder 5 nach vorne in Richtung ihrer Kupplungsstellung über die Kugeln 9 verschoben, so daß diese nicht mehr radial nach außen angehoben werden können und daher den Anschlußstecker 11 in seiner angekuppelten Stellung formschlüssig verriegeln. Da die Buchse 4 nach vorne verschoben wurde und dabei die zugeordnete Führungsbahn 3 ebenfalls nach vorne bewegt wurde, ist die Anlage des Führungszapfens 2 an der Kurve am Ende der Führungsbahn 3 aufgehoben, wodurch nunmehr der Hebel 1 freigegeben ist und verschwenkt werden kann.

Während eines ersten Verschwenkweges über einen Drehwinkel von ca. 15° wird die Buchse 4 mittels des in die Führungsbahn 3 eingreifenden Führungszapfens 2 nach vorne verschoben, derart, daß die Dichtung 6 den Druckauslaß 14 im Grundkörper 10 verschließt. Über den Drehwinkel von 15° bleibt das Ventil weiterhin geschlossen, da das Ventilglied noch nicht — auch nicht teilweise — in seiner Durchlaßstellung liegt.

Wird der Hebel 1 weiter verschwenkt (über 15° hinaus), so wird das Ventilglied 12 langsam öffnen. Liegt der Hebel 1 parallel mit dem Grundkörper 10 bzw. mit dem Ventilglied 12 (Fig. 6), so ist das Ventil vollständig geöffnet. Das Ventilglied 12 liegt in seiner Durchlaßstellung.

Während der Drehbewegung des Hebels 11 aus seiner 15°-Stellung in seine zum Grundkörper 10 parallele Lage (Übergang von der Stellung nach Fig. 5 zu der Stellung nach Fig. 6) muß die Buchse 4 nicht weiter verschoben werden. Die Führungsbahn 3 ist daher entsprechend ausgebildet. Das Schubriegelschloß aus dem Führungszapfen 2 und der Führungsbahn 3 sichert jedoch bei dem restlichen Drehwinkel von 75° die Buchse 4 in ihrer eingenommenen Lage, in der sie — über den Kugeln 9 liegend — den Anschlußstecker 11 verriegelt.

Das Abkuppeln des Anschlußsteckers 11 läuft folgendermaßen ab : Der Hebel 1 wird aus seiner Kuppelstellung gemäß Fig. 6 in Richtung auf seine Grundstellung gemäß Fig. 1 verschwenkt. Das Ventilglied 12 sperrt entsprechend der Drehbewegung das Ventil langsam ab. Bei Erreichen eines Drehwinkels von ca. 75° bzw. etwa 15° vor der Grundstellung des Hebels 1 (Fig. 5) ist das Ventil geschlossen. Bei einer weiteren Drehbewegung verschiebt die Führungszapfen 2/Führungsbahn 3 — Vorrichtung die Buchse 4 in rückwärtiger Richtung, um die Dichtung 6 von der äußeren Öffnung des Druckauslasses 14 zurückzuziehen, wodurch diese freigegeben wird. Nunmehr kann der nach Schließen des Ventils auf der Arbeitsseite noch anstehende Druck aus den Schläuchen und Arbeitsmaschinen über den Anschlußstecker 11 und den Druckauslaß 14 kontrolliert in die Atmosphäre entweichen. Durch die Drehung des Hebels 1 in die Ruhestellung gemäß Fig. 4 wird nicht unmittelbar der Anschlußstecker 11 freigegeben. Vielmehr muß der Hebel un z. B. weitere 10° über die Ruhestellung hinaus verschwenkt werden, um den Kugeln 9 ein Anheben in die im Grundkörper 10 vorgesehenen Durchlässe zu ermöglichen. Erst wenn die Kugeln g radial ausweichen können, wird die Feder 7 den Stecker 11 ausstoßen und die Hülse 13 unter die Kugeln 9 schieben, so daß die Kugeln auf der äußeren Mantelfläche der Hülse 13 aufliegen und mit einem Teil ihres Umfangs über den Außenmantel des Grundkörpers 10 hervorstehen, wodurch die Buchse 4 in ihrer zurückgezogenen, entkuppelten, rückwärtigen Lage gehalten ist. Wird der Bedienungshebel nun losgelassen, so schwenkt er in seine Ruhestellung zurück, die im gezeigten Ausführungsbeispiel 90° seitwärts zum Grundkörper 10 liegt.

## Patentansprüche

1. Renkanschluß für eine Druckleitung, mit einem röhrenförmigen Grundkörper (10), mit einem am Grundkörper (10) befestigten, um einen Zapfen verschwenkbaren Bedienungshebel (1) zur Betätigung eines Ventilgliedes (12) und von Kuppelelementen (4, 9), die am vorderen Ende des Grundkörpers (10) zum An- und Abkuppeln eines Anschlußsteckers (11) vorgesehen sind, wobei diese Kuppelelemente eine Druck-Zug-Buchse (4) umfassen, die das vordere Ende des Grundkörpers (10) umgibt, dadurch gekennzeichnet, daß der Bedienungshebel (1) unmittelbar das Ventilglied (12) zum Öffnen und Schließen eines Ventils und die Druck-Zug-Buchse (4) zum An- und Abkuppeln des Anschlußsteckers (11) betätigt, daß zwischen dem Ventilglied (12) und einer Dichtung (8) des Anschlußsteckers (11) im Grundkörper (10) ein Druckauslaß (14) angeordnet ist, der in der Durchlaßstellung des Ventils durch eine Dichtung (6) der Druck-Zug-Buchse (4) verschlossen ist, und daß in der Sperrstellung des Ventils die Dichtung (6) den Druckauslaß (14) freigibt, bevor die Druck-Zug-Buchse (4) in eine Lage Zum Abkuppeln des Anschlußsteckers (11) verschoben ist, derart, daß der auf der Auslaßseite anstehende Druck in die Atmosphäre entweichen kann.

2. Renkanschluß nach Anspruch 1, dadurch gekennzeichnet, daß die Antriebsverbindung zwischen dem Bedienungshebel (1) und der Druck-Zug-Buchse (4) aus einem in einer Führungsbahn (3) laufenden Führungszapfen (2) besteht, wobei der Verlauf der Führungsbahn (3) die axiale Verschiebeposition der Druck-Zug-Buchse (4) in Abhängigkeit vom Drehwinkel des Bedienungshebels (1) bestimmt.

3. Renkanschluß nach Anspruch 1 oder 2, dadurch gekennzeichnet, daß die Druck-Zug-Buchse (4) in Richtung auf ihre Kupplungsstellung ebenso wie in der Grundstellung des Hebels (1), in der das Ventilglied (12) in Sperrstellung liegt, durch eine Feder (5) belastet ist und der angekuppelte Stecker (11) durch eine Verschwenkung des Hebels (1) gegen die Kraft der Feder (5) über die Grundstellung des Hebels (1) hinaus, abkuppelbar ist.

4. Renkanschluß nach Anspruch 3, dadurch gekennzeichnet, daß im Grundkörper (10) eine federbelastete Hülse (13) angeordnet ist, die mit einer dem Ende des Anschlußsteckers (11) zugeordneten Dichtung (8) versehen ist, und daß bei abgekuppeltem Stecker (11) der Außenmantel der Hülse (13) die Kuppelelemente (9) in einer angehobenen Stellung hält, in der die Kuppelelemente (9) die Druck-Zug-Buchse (4) daran hindern, in ihre Kupplungsstellung (Fig. 3) vorzugleiten.

5. Renkanschluß nach Anspruch 1, dadurch gekennzeichnet, daß der Abschnitt des Grundkörpers (10), der von der Druck-Zug-Buchse (4) umgeben und auf dem diese gleitend geführt ist und der ferner ein Kupplungsglied für den Anschlußstecker (11) bildet, als einteiliger, röhrenförmiger Körper ausgebildet ist.

## Claims

1. Bayonet joint for a pressure line, with a tubular base member (10), with an operating lever (1) attached to the base member (10) and able to tilt about a pin, for actuating a valve member (12) and coupling members (4, 9), which are provided on the front end of the base member (10) for connecting and disconnecting an attaching plug (11), these coupling members comprising a push-pull bush (4), which surrounds the front end of the base member (10), characterised in that the operating lever (1) directly actuates the valve member (12) for opening and closing a valve and the push-pull bush (4) for connecting and disconnecting the attaching plug (11), located between the valve member (12) and a seal (8) of the attaching plug (11) in the base member (10) is a pressure outlet (14), which is closed off in the open position of the valve by a seal (6) of the push-pull bush (4) and that in the closed position of the valve, the seal (6) releases the pressure outlet (14), before the push-pull bush (4) is moved into a position for disconnecting the attaching plug (11) so that the pressure prevailing on the outlet side can escape into the atmosphere.

2. Bayonet joint according to Claim 1, characterised in that the driving connection between the operating lever (1) and the push-pull bush (4) consists of a guide pin (2) moving in a guide track (3), the path of the guide track (3) determining the axial displacement position of the push-pull bush (4) depending on the angle of rotation of the operating lever (1).

3. Bayonet joint according to Claim 1 or 2, characterised in that in the direction of its coupling position as well as in the basic position of the lever (1), in which the valve member (12) is in the closing position, the push-pull bush (4) is loaded by a spring (5) and the connected plug (11) can be disconnected by swinging the lever (1) against the force of the spring (5) beyond the basic position of the lever (1).

4. Bayonet joint according to Claim 3, characterised in that a spring-loaded sleeve (13) is located in the base member (10), which sleeve is provided with a seal (8) facing the end of the attaching plug (11) and that when the plug (11) is disconnected, the outer surface of the sleeve (13) keeps the coupling members (9) in a raised position, in which the coupling members (9) prevent the push-pull bush (4) from sliding into its coupling position (Figure 3).

5. Bayonet joint according to Claim 1, characterised in that the section of the base member (10), which is surrounded by the push-pull bush (4) and on which the latter is guided to slide and which furthermore forms a coupling member for the attaching plug (11), is constructed as a one-piece tubular member.

## Revendications

1. Raccord à baïonnette pour un conduit à haute pression, comprenant un élément de base tubulaire (10), un levier de manœuvre (1) qui, fixé à l'élément de base (10) et pouvant être tourné autour d'un pivot, est destiné à actionner un obturateur (12) et des organes d'accouplement (4, 9) qui sont prévus à l'extrémité antérieure de l'élément de base (10) pour raccorder et dégager une tubulure de raccordement (11), ces organes d'accouplement comprenant un manchon à pousser et tirer (4), lequel entoure l'extrémité antérieure de l'élément de base (10), caractérisé en ce que le levier de manœuvre (1) actionne directement l'obturateur (12) pour ouvrir ou fermer un robinet et le manchon à pousser et tirer (4) pour raccorder ou dégager la tubulure de raccordement (11), en ce qu'il est monté entre l'obturateur (12) et un joint d'étanchéité (8) de la tubulure de raccordement (11) dans l'élément de base (10) une sortie de pression (14) qui dans la position passante du robinet est fermée par un joint d'étanchéité (6) du manchon à pousser et tirer (4), et en ce que dans la position d'arrêt du robinet le joint d'étanchéité (6) libère la sortie de pression (14) avant que le manchon à pousser et tirer (4) n'ait été amené, en coulissant, dans une position permettant le dégagement de la tubulure de raccordement (11), de telle manière que la pression régnant du côté de sortie puisse s'échapper dans l'atmosphère.

2. Raccord à baïonnette selon la revendication 1, caractérisé en ce que la liaison d'entraînement entre le levier de manœuvre (1) et le manchon à pousser et tirer (4) est constituée par une tige de guidage (2) se déplaçant dans une voie de guidage (3), le tracé de la voie de guidage (3) déterminant la position de translation axiale du manchon à pousser et tirer (4) en fonction de l'angle de rotation du levier de manœuvre (1).

3. Raccord à baïonnette selon la revendication 1 ou 2, caractérisé en ce que le manchon à pousser et tirer (4) est sollicité en direction de sa position d'accouplement ainsi que dans la position de départ du levier (1), où l'obturateur (12) se trouve en position d'arrêt, par un ressort (5) et en ce que la tubulure accouplée (11) peut être dégagée en tournant le levier (1) à l'encontre de la force du ressort (5) au-delà de la position de départ du levier (1).

4. Raccord à baïonnette selon la revendication 3, caractérisé en ce que dans l'élément de base (10) est montée une douille (13) sollicitée par ressort, laquelle est munie d'un joint d'étanchéité (8) associé à l'extrémité de la tubulure de raccordement (11) et en ce que, lorsque la tubulure (11) est dégagée, la périphérie extérieure de la douille (13) maintient les organes d'accouplement (9) dans une position relevée où les organes d'accouplement (9) empêchent le manchon à pousser et tirer (4) de glisser en avant dans sa position d'accouplement (figure 3).

5. Raccord à baïonnette selon la revendication 1, caractérisé en ce que la partie de l'élément de base (10) qui est entourée par le manchon à pousser et tirer (4) et sur laquelle ce dernier est guidé de façon à glisser et qui, en outre, forme un organe d'accouplement pour la tubulure de raccordement (11), est réalisée sous la forme d'un corps tubulaire en une seule pièce.

**Fig. 1**

**Fig. 2**

0 150 236

Fig. 3

Fig. 4

Fig. 5

Fig. 6